(19) Europäisches Patentamt
European Patent Office
Office européen des brevets

(11) Numéro de publication: **0 188 977**
**A1**

(12) **DEMANDE DE BREVET EUROPEEN**

(21) Numéro de dépôt: **85420229.8**

(22) Date de dépôt: **17.12.85**

(51) Int. Cl.[4]: **C 08 J 5/12**, C 08 L 83/04, H 01 B 3/46

(30) Priorité: **20.12.84 FR 8419507**

(43) Date de publication de la demande: **30.07.86 Bulletin 86/31**

(84) Etats contractants désignés: **CH DE FR GB LI**

(71) Demandeur: **RHONE-POULENC SPECIALITES CHIMIQUES, "Les Miroirs" 18, Avenue d'Alsace, F-92400 Courbevoie (FR)**

(72) Inventeur: **Rostaing, Paul, Les Charavelles Bâtiment Jonquille, F-38200 Vienne (FR)**
Inventeur: **Bazenet, Jean, 17, Les Ecoarées, F-69360 Chaponnay (FR)**

(74) Mandataire: **Seugnet, Jean Louis et al, RHONE-POULENC INTERSERVICES Service Brevets Chimie Centre de Recherches de Saint-Fons B.P. 62, F-69192 Saint-Fons Cédex (FR)**

(54) **Procédé de fabrication de matériaux composites consistant à faire adhérer efficacement des élastomères silicones entre eux par un traitement de surface.**

(57) La présente invention concerne un procédé de fabrication de matériaux composites consistant:

1) à enduire la surface d'un élastomère silicone d'une mince couche d'une solution dans au moins un solvant organique d'au plus 15% en poids d'un polymère méthylhydrogénopolysiloxanique;

2) à assurer le séchage de la couche déposée à l'air ambiant pendant au plus 3 heures;

3) à appliquer sur la couche séchée sous (2) une composition organopolysiloxanique durcissant en élastomère par une réaction d'addition;

4) à laisser durcir la composition appliquée sous (3) en élastomère.

Application du procédé de l'invention à la fabrication d'embouts isolants dans le domaine électrotechnique.

EP 0 188 977 A1

# PROCEDE DE FABRICATION DE MATERIAUX COMPOSITES CONSISTANT A FAIRE ADHERER EFFICACEMENT DES ELASTOMERES SILICONES ENTRE EUX PAR UN TRAITEMENT DE SURFACE

La présente invention a pour objet un procédé amélioré de fabrication de matériaux composites consistant à faire adhérer efficacement des élastomères silicones entre eux à l'aide d'un traitement de surface, l'un au moins des élastomères étant appliqué à l'état non durci sous forme d'une composition réticulant par une réaction d'addition.

Il est connu d'effectuer un traitement de surface tel que l'application d'un primaire, pour établir une liaison efficace entre 2 élastomères silicones. Ainsi le brevet britannique 1 588 510 décrit un procédé de collage de 2 élastomères silicones entre eux comportant les phases suivantes :

(1) dépôt sur la surface d'un élastomère silicone d'un revêtement à base d'un organohydrogénopolysiloxane constitué d'au moins 50 moles % de motifs de formule $OSiH(CH_3)$ ;

(2) chauffage du revêtement pour effectuer au moins partiellement la réticulation de l'organohydrogénopolysiloxane ;

(3) application sur le revêtement d'une composition durcissable en élastomère renfermant un diorganopolysiloxane ayant des radicaux vinyles liés à des atomes de Si, un organopolysiloxane ayant au moins 2 atomes d'hydrogène liés à des atomes de silicium et un catalyseur.

Le texte du brevet britannique 1 588 510 indique que dans la phase 1) l'organohydrogénopolysiloxane peut être appliqué tel quel ou sous forme d'une solution dans un solvant organique volatil. En l'absence d'indications plus précises, relatives aux concentrations employées, il faut se reporter à l'exemple du brevet qui illustre l'emploi d'une solution dans un solvant organique chloré renfermant 50 % en poids de l'organohydrogénopolysiloxane.

L'utilisation du procédé figurant dans le brevet 1 588 510 permet effectivement d'améliorer l'adhérence entre les élastomères silicones précités. Cependant ce procédé met en oeuvre dans la

phase 1) une solution fortement concentrée en organohydrogénopolysiloxane et dans la phase 2) une période de chauffage consommant de l'énergie et nécessitant un appareillage approprié. Des résultats d'adhérence parfois corrects peuvent cependant être obtenus sans utilisation d'un traitement de surface. Ainsi les demandes européennes 95 260 et 111 022 enseignent la fabrication d'articles composites par moulage, à température élevée et sous forte pression, d'assemblages formés (e) soit d'un élastomère silicone conducteur durci à l'aide d'un peroxyde organique et d'une composition organopolysiloxanique isolante durcissant par addition, (2e) soit d'un élastomère silicone conducteur durci par addition et d'une composition organopolysiloxanique isolante durcissant à l'aide d'un peroxyde organique.

La technique de moulage à chaud et sous pression n'est pas applicable en n'importe quel lieu ; elle nécessite un appareillage lourd qui n'est pas aisément transportable.

Par ailleurs, les résultats d'adhérence obtenus en suivant l'enseignement du brevet anglais 1 558 510 et des demandes européennes 95 260 et 111 022 ne sont pas toujours satisfaisants, ceci est plus précisément le cas pour les assemblages composites comportant d'une part des élastomères silicones conducteurs chargés au noir de carbone durcis à l'aide de peroxydes organiques et d'autre part des élastomères silicones isolants issus de compositions durcissant par addition et renfermant des silices finement divisées traitées par des composés organosiliciques.

La présente invention a pour objectif de pallier les inconvénients précités ; dans cette optique, elle propose un nouveau procédé de fabrication de matériaux composites, par collage d'élastomères silicones entre eux.

Ce procédé consiste :

(1) à enduire la surface d'un élastomère silicone d'une mince couche d'une solution d'un polymère méthylhydrogénopolysiloxanique dans un ou plusieurs solvants organiques, lequel polymère méthylhydrogénopolysiloxanique porte au moins 3 atomes d'hydrogène liés à des atomes de silicium ;

(2) à assurer le séchage de la couche de la solution déposée sous (1) ;

(3) à appliquer sur la couche séchée sous (2) une composition organopolysiloxanique durcissant en élastomère par une réaction d'addition ;

(4) à laisser la composition organopolysiloxanique appliquée sous (3) durcir en élastomère.

Ce procédé est caractérisé en ce que :

- dans la phase 1) la solution appliquée sur la surface de l'élastomère, renferme au plus 15 % en poids du polymère méthylhydrogénopolysiloxanique ;

- dans la phase 2) le séchage de la couche déposée de la solution est obtenu par simple abandon à l'air ambiant pendant au plus une période de 3 heures.

L'élastomère silicone sur lequel est déposée la solution renfermant le polymère méthylhydrogénopolysiloxanique est généralement choisi dans le groupe bien connu des élastomères issus de compositions organopolysiloxaniques durcissables à chaud.

Plus précisément il peut être obtenu à partir de compositions formées par mélange de gommes diorganopolysiloxaniques, de charges minérales, de peroxydes organiques, et éventuellement d'adjuvants divers tels que pigments, agents empêchant la structuration, agents améliorant la résistance thermique, la résistance à la combustion.... Ces compositions réticulent généralement par chauffage au-dessus de 100°C.

Les gommes diorganopolysiloxaniques employées présentent une viscosité supérieure à 1 million de mPa.s à 25°C; elles sont constituées principalement d'une succession de motifs diorgansiloxy choisis le plus souvent parmi ceux de formules :

$(CH_3)_2SiO$, $CH_3(CH_2{=}CH)SiO$, $CH_3(C_6H_5)SiO$, $(C_6H_5)_2SiO$

Elles sont bloquées à chaque extrémité de leur chaîne par un radical hydroxyle et/ou alcoxyle lié à l'atome de silicium terminal ou par un motif triorganosiloxy pouvant être choisi dans le groupe des motifs de formules $(CH_3)_3SiO_{0,5}$, $(CH_3)_2CH_2{=}CHSiO_{0,5}$, $CH_3(C_6H_5)CH_2{=}CHSiO_{0,5}$.

De préférence sont employées des gommes méthylvinylpolysiloxanique constituées de 98 à 99,9 moles % de motifs de formule $(CH_3)_2SiO$ et 2 à 0,1 moles % de motifs de formule $CH_3(CH_2{=}CH)SiO$.

Les charges minérales incorporées sont de préférence choisies parmi :

- les silices de précipitation, de combustion, les aérogels de silice ;
- les oxydes de titane, d'aluminium, de fer, obtenus par combustion ;
- les noirs de carbone tels que les noirs conducteurs d'acétylène et de four, de surface spécifique supérieure à 40 m2/g
- les silices de diatomées, le quartz broyé, les argiles calcinées ;
- les oxydes de fer, titane, magnésium, aluminium, zinc ;
- les oxydes et hydroxydes de terres rares ;
- le carbonate de calcium, le sulfate de baryum

Elles peuvent être utilisées à raison de 5 à 150 parties pour 100 parties de gommes.

Les peroxydes organiques utilisés peuvent être choisis parmi le peroxyde de benzoyle, le peroxyde de dichloro-2,4 benzoyle, le peroxyde de dicumyle, le bis(t-butylperoxy)-2,5 diméthyl-2,5 hexane, le perbenzoate de t-butyle, le carbonate de peroxy t-butyle et d'isopropyle, le peroxyde de di-t-butyle, le bis(t-butylperoxy)-1,1 triméthyl-3,3,5 cyclohexane). Ils peuvent être introduits à raison de 0,1 à 7 parties pour 100 parties de gommes.

Les compositions organopolysiloxaniques réticulant, en présence de peroxydes organiques, sont décrites dans de nombreux documents ; elles figurent en particulier dans les demandes européennes 109 508 et 111 935, et le brevet américain 4 434 195.

La composition organopolysiloxanique durcissant en élastomère par une réaction d'addition, qui est appliquée sur la surface de l'élastomère décrit ci-avant est choisie parmi les compositions dites à SiH et SiVi catalysés par un dérivé d'un métal du groupe du platine comme le rhodium et le ruthénium.

Ces compositions peuvent être formées par mélange (1) d'huiles diorganopolysiloxaniques portant le long et/ou en bout de leur chaine des radicaux vinyles liés à des atomes de silicium, les autres radicaux étant en majorité des radicaux méthyles associés éventuellement à des radicaux phényles, (2) de polymères organohydrogénopolysiloxaniques portant des atomes d'hydrogène liés à des atomes de silicium et (3) de catalyseurs à base de dérivés du platine.

Les huiles diorganopolysiloxaniques peuvent avoir une viscosité s'échelonnant entre 1000 mPa.s à 25°C et 1.000.000 de mPa.s à 25°C.

Les polymères organohydrogénopolysiloxaniques peuvent être linéaires, cycliques ou ramifiés ; leur structure est analogue à celle décrite ultérieurement concernant le polymère méthylhydrogénopolysiloxanique, utilisé dans la phase (1) du procédé conforme à l'invention.

Les catalyseurs à base de dérivés d'un métal du groupe du platine peuvent être des composés bien définis tels que $PtCl_4$, $H_2PtCl_6$-$6H_2O$ ou des complexes du type platine-alcool, platine-oléfine, platine-éther, platine-aldéhyde, platine-vinylméthylpolysiloxane, possédant ou non des atomes d'halogène liés au platine.

Ces compositions peuvent renfermer en plus des constituants précédents, des copolymères résineux formés par exemple de motifs de formules $(CH_3)_3SiO_{0,5}$ et $SiO_2$ associés à une faible quantité (0,2 à 10 % ) de motifs de formules $CH_2 = CH(CH_3)_2SiO_{0,5}$ et/ou $CH_2$=$CH(CH_3)SiO$. Elles peuvent renfermer encore des additifs pour inhiber l'activité catalytique des dérivés du groupe du platine tels que des amines, des oximes organiques, des alcools acétyléniques tertiaires et les composés décrits dans les demandes européennes 94 185 et 117 056.

Elles peuvent enfin renfermer des charges minérales du type de celles décrites ci-avant, destinées aux compositions durcissant en présence de peroxydes organiques. En particulier, elles peuvent renfermer des silices de combustion et de précipitation, de surface spécifique, mesurée selon les méthodes BET et CTAB, d'au moins 70 m2/g et dont les dimensions moyennes des particules primaires sont inférieures à 80 nm.

Ces silices peuvent être incorporées telles quelles ou après un traitement hydrophobe préalable à l'aide de composés organosiliciques. Parmi ces composés, figurent les méthylpolysiloxanes tels que l'hexaméthyldisiloxane, l'octaméthylcyclotétrasiloxane, des

méthylpolysilazanes, tels que l'hexaméthyldisilazane, l'hexaméthylcyclotrisilazane, des chlorosilanes, tels que le diméthyldichlorosilane, le triméthylchlorosilane, le méthylvinyldichlorosilane, le diméthylvinylchlorosilane, des alcoxysilanes, tels que le diméthyldiméthoxysilane, le diméthylvinyléthoxysilane, le triméthylméthoxysilane. Lors de ce traitement, les silices peuvent accroitre leur poids de départ jusqu'à un taux de 20 %.

Les compositions organopolysiloxaniques durcissant en élastomères par une réaction d'addition sont décrites dans de nombreux documents notamment dans les demandes européennes 11 714, 61 241, 91 737, 110 370 et les brevets américains 4 382 057 et 4 427 801.

Le polymère méthylhydrogénopolysiloxanique mis en oeuvre dans la phase (1) du procédé de l'invention possède au moins 3 atomes d'hydrogène liés à des atomes de silicium, étant entendu que chaque atome de silicium ne peut porter au plus qu'un atome d'hydrogène.

Ce polymère méthylhydrogénopolysiloxanique peut avoir une structure linéaire, cyclique ou ramifiée ; de préférence, il répond à la formule générale moyenne ($F_1$) :

$$(CH_3)_x H_y SiO_{\frac{4-x-y}{2}}$$

dans laquelle le symbole x représente un nombre quelconque de valeur 0,9 à 1,99, le symbole y représente un nombre quelconque de valeur 0,1 à 1 et la somme x + y a une valeur de 1,2 à 2,6.

Les divers motifs pouvant constituer le polymère méthylhydrogénopolysiloxanique sont choisis parmi ceux de formules $(CH_3)_3SiO_{0,5}$, $(CH_3)_2SiO$, $CH_3SiO_{1,5}$, $SiO_2$, $H(CH_3)_2SiO_{0,5}$, $H(CH_3)SiO$, $HSiO_{1,5}$ ; au moins un motif possédant une liaison SiH est nécessairement utilisé.

A titre illustratif, de polymères linéaires représentés par la formule générale ($F_1$) peuvent être cités ceux de formules :

$(CH_3)_3Si[OSiH(CH_3)]_zOSi(CH_3)_3$ ; $H(CH_3)_2Si[OSiH(CH_3)]_zOSi(CH_3)_2H$

$H(CH_3)_2Si[OSiH(CH_3)]_z[OSi(CH_3)_2]_hOSi(CH_3)_2H$ ; $(CH_3)_3Si[OSiH(CH_3)]_z[-OSi(CH_3)_2]_hOSi(CH_3)_3$

Le symbole z représente un nombre quelconque de valeur 3 à 120, et le symbole h un nombre quelconque de valeur 1 à 150.

A titre illustratif de polymères cycliques représentés par la formule générale ($F_1$) peuvent être cités ceux de formules :

$[OSiH(CH_3)]_k$ ; $[OSiH(CH_3)]_2[OSi(CH_3)_2]_2$

Le symbole k représente un nombre entier de valeur 3 à 7.

A titre illustratif de polymères ramifiés représentés par la formule générale ($F_1$) peuvent être cités ceux constitués d'une association de otifs :

- $H(CH_3)_2SiO_{0,5}$ et $SiO_2$
- $H(CH_3)_2SiO_{0,5}$ et $CH_3SiO_{1,5}$
- $H(CH_3)_2SiO_{0,5}$, $(CH_3)_2SiO$ et $SiO_2$
- $H(CH_3)_2SiO_{0,5}$, $(CH_3)_3SiO_{0,5}$ et $HSiO_{1,5}$
- $H(CH_3)SiO$, $(CH_3)_3SiO_{0,5}$ et $SiO_2$

Ces associations peuvent conduire, selon la valeur du rapport molaire des motifs en présence, par exemple à des composés de formules :

$CH_3Si[OSiH(CH_3)_2]_3$ , $Si[OSi(CH_3)_2H]_4$

$HSi[OSiH(CH_3)_3][OSi(CH_3)_2H]_2$

Le polymère méthylhydrogénopolysiloxanique peut se présenter sous la forme d'un liquide de viscosité par exemple 2 mPa.s à 25°C à 100.000 mPa.s à 25°C ; il peut également avoir l'aspect d'une gomme de viscosité supérieure à 1 million de mPa.s à 25°C ou d'un produit résineux soluble dans les diluants organiques ou organosiliciques.

Pour mettre en oeuvre le polymère méthylhydrogénopolysiloxanique selon le procédé conforme à l'invention, il est nécessaire de le diluer dans des solvants organiques.

Les solutions obtenues doivent renfermer de 0,2 à 15 % en poids de polymère méthylhydrogénopolysiloxanique, de préférence de 0,5 à 12 % en poids. Les solvants organiques peuvent être choisis parmi :

- les hydrocarbures aromatiques halogénés ou non tels que le toluène, le xylène, le chlorobenzène, l'orthodichlorobenzène ;

- les hydrocarbures aliphatiques linéaires et cycliques tels que certaines coupes pétrolières distillant par exemple entre 90°C et 250°C à la pression atmosphérique, le cyclohexane, le méthylcyclohexqne ;

- les hydrocarbures aliphatiques linéaires halogénés tels que le trichloroéthylène, le perchloroéthylène, le tétrachloroéthane,

le tétrachloro-1,1,2,2 difluoro-1,2 éthane, le trichloro-1,1,2 trifluoro-1,2,2 éthane ;

- les cétones et esters aliphatiques tels que la méthyléthylcétone, l'acétate de n-butyle.

Les solutions renfermant le polymère méthylhydrogénopolysiloxanique, sont appliquées au cours de la phase (1) du procédé sur les surfaces des élastomères à traiter au moyen des techniques usuelles par exemple au trempé, à la brosse, au pinceau, par pulvérisation. La quantité déposée de chaque solution doit être suffisante pour mouiller d'une façon uniforme toutes les surfaces des élastomères qui seront ultérieurement mises en contact avec les compositions durcissant par addition. En général, la couche déposée de la solution forme un film liquide d'une épaisseur de 1 à 100 µm.

Ce film est abandonné, c'est la phase 2 du procédé, à l'air ambiant pendant une période de temps d'au plus 3 heures. Au-delà de cette durée, les caractéristiques de collage risquent d'être moins bonnes. Des périodes de temps très courtes, de l'ordre de quelques minutes, par exemple 10 minutes, peuvent très bien convenir. On peut penser qu'une grande partie des solvants s'évaporent pendant cette phase de séchage, pour laquelle les conditions environnantes sont celles de l'air ambiant, c'est à dire une température se situant généralement vers 5 à 45°C et un degré d'humidité relative vers 10 à 90 %.

Une fois cette phase (2) de séchage terminée, les compositions durcissant par addition sont déposées sur les surfaces traitées, c'est la phase (3) du procédé. Cette opération peut avoir lieu dans des moules qui donnent aux élastomères, issus des compositions durcissant par addition, la forme recherchée.

Ces compositions dans la plupart des cas coulent sous leur propre poids ; elles présentent alors une viscosité de 10.000 à 200.000 mPa.s à 25°C. Elles peuvent donc épouser aisément non seulement la surface des élastomères enduits mais également tout l'espace libre des moules. Elles peuvent être mises en oeuvre à l'aide des techniques classiques de moulage telles que le moulage par compression, injection, transfert ; mais dans la plupart des cas, il n'est pas nécessaire d'utiliser une pression supérieure à

la pression atmosphérique.

Dans la mesure où les compositions durcissant par addition ne renferment pas d'agents inhibant l'activité catalytique des dérivés du groupe du platine, il est possible d'obtenir dans la phase (4) du procédé, une réticulation en élastomère par abandon à la température ambiante par exemple pendant une période d'au moins 8 heures vers 15 à 30°C. Cependant pour accélérer le durcissement, un chauffage à une température au-dessus de 100°C est conseillé pendant une période de temps variable, dépendant principalement de la température, de l'activité du catalyseur. Cette période peut s'étendre de quelques minutes à 60 minutes.

Cette technique de collage, mise en oeuvre en opérant selon le procédé conforme à l'invention, peut être utilisée dans toutes les applications qui nécessitent de lier deux ou plusieurs élastomères de silicone entre eux. Il suffit en effet de disposer une couche plus ou moins épaisse d'une composition de silicone durcissant par addition entre les surfaces préalablement traitées de ces élastomères et d'attendre le durcissement de la composition. Toutefois cette technique sert plus spécifiquement à fabriquer des matériaux composites comportant chacun deux élastomères silicones liés énergiquement entre eux, l'un des 2 élastomères étant issu d'une composition organopolysiloxanique renfermant du noir de carbone conducteur, durcissant à l'aide d'un peroxyde organique, et l'autre élastomère étant issu d'une composition organopolysiloxanique renfermant une silice finement divisée (traitée par un composé organosilicique pour la rendre hydrophobe), et durcissant par addition.

Ces matériaux composites, comportant chacun un élastomère silicone conducteur et un élastomère silicone isolant, peuvent servir par exemple d'embouts isolants dans le domaine électrotechnique ; ils sont enfilés sur les câbles conducteurs, transportant du courant à haute tension, dans les zones où il est nécessaire de relier deux câbles entre eux ou de raccorder un câble à un transformateur ou à un disjoncteur. Ces embouts sont généralement constitués d'un déflecteur, en élastomère silicone conducteur (chargé d'un noir de carbone) noyé dans un élastomère silicone isolant. La présence du déflecteur permet de canaliser le champ

électrique en l'absence de blindage métallique.

Pour assurer la cohésion de l''embout et son efficacité, il est indispensable que l'élastomère isolant adhère fortement au déflecteur. Le procédé conforme à l'invention facilite la réalisation de ce type d'assemblages composites. Il suffit en effet de fabriquer tout d'abord par une technique de moulage classique, (par exemple par compression ou injection) un déflecteur en élastomère silicone conducteur ; cet élastomère est issu, comme déjà indiqué, d'une composition organopolysiloxanique renfermant comme charge du noir de carbone conducteur, et durcissant à l'aide d'un peroxyde organique. Le déflecteur est ensuite trempé (ou imprégné) dans une solution d'un polymère organohydrogénopolysiloxanique puis il est abandonné à l'air ambiant. Après séchage de la couche déposée de la solution, le déflecteur est placé dans un moule approprié et on coule tout autour du déflecteur une composition organopolysiloxanique isolante durcissant par addtion, renfermant comme charge une silice de précipitation ou de combustion traitée par un composé organosilicique tel que l'hexaméthyldisilazane.

Après durcissement de la composition, avec ou sans chauffage et de préférence à la pression atmosphérique, l'embout est terminé ; sa préparation n'a nécessité ni chauffage pendant la phase de séchage du film de solution appliqué sur la surface de l'élastomère conducteur, ni utilisation d'une quantité importante du méthylhydrogénopolysiloxane du fait de la faible concentration de ce dernier dans la solution déposée.

L'exemple suivant illustre l'invention :

<u>EXEMPLE</u>

On mélange intimement à l'aide d'un malaxeur :

- 100 parties d'une gomme méthylvinylpolysiloxanique de viscosité 50 millions de mPa.s à 25°C comprenant dans sa chaine 99,7 % de motifs diméthylsiloxy et 0,3 % de motif méthylvinylsiloxy, bloquée à chaque extrémité de sa chaine par un motif triméthylsiloxy et 50 parties du noir d'acétylène de surface spécifique 85 m2/g.

On enlève du malaxeur la composition obtenue, la dispose sur un mélangeur à 2 cylindres et lui incorpore, à l'aide de ce dispositif, 6,2 % en poids d'une poudre renfermant 40 % de peroxyde de dicumyle et 60 % de carbonate de calcium. La composition catalysée est découpée en petits carrés puis placée dans des moules en acier de profondeur 2 mm ; l'ensemble est chauffé pendant 10 minutes à 150-160°C sous une pression de 30 bars.

Il en résulte la formation de plaques d'élastomère conducteur de dimensions 150 x 150 x 2 mm.

Les plaques sont divisées en 2 lots $L_1$ et $L_2$. L'une des 2 grandes faces de chaque plaque du lot $L_1$ est enduite au pinceau d'une solution à 2 % d'un méthylhydrogénopolysiloxane dans le trichloro-1,1,2 trifluoro-1,2,2 éthane et l'une des 2 grandes faces de chaque plaque du lot $L_2$ est enduite, toujours au pinceau, d'une solution à 50 % (au lieu de 2 % précédemment) du même méthylhydrogénopolysiloxane dans le trichloro-1,1,2 trifluoro-1,2,2 éthane. Le méthylhydrogénopolysiloxane utilisé a une viscosité d'environ 25 mPa.s à 25°C. Il répond à la formule moyenne :

$$(CH_3)_3SiO[SiH(CH_3)_O]_{45}Si(CH_3)_3$$

Les plaques $L_1$ et $L_2$ sont ensuite abandonnées pendant 10 minutes à l'air ambiant (température 20°C, humidité relative 75 %). Elles sont aussitôt placées dans des moules en acier, la face non traitée de chaque plaque étant en contact avec le fond du moule. La face traitée est alors recouverte d'une couche de 1 cm d'une composition organopolysiloxanique de viscosité initiale environ 20 000 mPa.s à 25°C.

Cette composition est préparée par mélange de :

- 80 parties d'une huile diméthylpolysiloxanique bloquée à chaque extrémité de sa chaine par un motif diméthylvinylsiloxy, de viscosité 900 mPa.s à 25°C ;

- 35 parties d'une silice de combustion de surface spécifique 300 m2/g traitée par de l'hexaméthyldisilazane (le traitement est effectué par malaxage de la silice avec l'hexaméthyldisilazane dans le rapport pondéral 5/1 en présence d'eau) ;

- 5 parties d'une huile diméthylpolysiloxanique bloquée à chaque extrémité de sa chaine par un motif diméthylhydrogénosiloxy, de degré de polymérisation 15 ;

- 3 parties d'une huile méthylhydrogénopolysiloxanique,

constituée de motifs diméthylsiloxy et méthylhydrogénosiloxy, bloquée à chaque extrémité de sa chaine par un motif triméthylsiloxy, ayant environ 9 SiH par mole, de degré de polymérisation 150 ;

- 0,0013 partie de platine métal sous la forme d'une solution renfermant 0,030 g de platine par ml (cette solution est préparée selon l'exemple 1 du brevet français 1 367 044).

Les moules et leur contenu sont alors chauffés pendant 40 minutes à 110°C sous une pression de l'ordre de la pression atmosphérique. A la fin de cette phase de traitement, la composition s'est transformée par réticulation par addition en un élastomère qui adhère étroitement à l'élastomère conducteur.

On mesure l'adhérence entre ces 2 élastomères par un test de pelage. A cet effet, on colle 2 plaques d'élastomères conducteurs entre elles du côté de leur face traitée à l'aide d'une couche durcie de 2 mm d'épaisseur de la composition catalysée par le platine. On utilise un dynamomètre dont la vitesse de traction des mâchoires est de 200 mm/mn. On mesure également l'ahdérence entre ces deux élastomères après avoir apporté la modification suivante : les plaques en élastomères conducteur des lots $L_1$ et $L_2$, après leur phase d'enduction au moyen des solutions renfermant le méthylhydrogénopolysiloxane, sont chauffées pendant 10 minutes à 110°C au lieu d'être abandonnées pendant 10 minutes à l'air ambiant.

Les résultats des mesures d'adhérence par pelage sont rassemblés dans le tableau ci-après et sont exprimés en KN/m.

| | PLAQUES LOT $L_1$ TRAITEES PAR UNE SOLUTION A 2 % DU METHYLHYDROGENOPOLYSILOXANE | PLAQUES LOT $L_2$ TRAITEES PAR UNE SOLUTION A 50 % DU METHYLHYDROGENOPOLYSILOXANE |
|---|---|---|
| abandon à l'air ambiant pendant 10 minutes | 1,2 | 0,7 |
| chauffage à 110° pendant 10 minutes | 1,3 | 0,8 |

On constate

1) que le traitement avec la solution à 50 % du méthylhydrogénopolysiloxane conduit à une médiocre adhérence ;

2) que le traitement avec la solution à 2 % du méthylhydrogénopolysiloxane conduit à une bonne adhérence mais la phase de chauffage à 100°C est superflue.

## REVENDICATIONS

1) Procédé de fabrication de matériaux composites par collage d'élastomères silicones entre eux selon lequel :

- on enduit la surface d'un élastomère silicone d'une même couche d'une solution d'un polymère méthylhydrogénopolysiloxanique dans un ou plusieurs solvants organiques, lequel polymère méthylhydrogénopolysiloxanique porte au moins 3 atomes d'hydrogène liés à des atomes de silicium ;

- on assure le séchage de la couche de la solution déposée sous (1) ;

- on applique sur la couche séchée sous (2) une composition organopolysiloxanique durcissant en élastomère par une réaction d'addition ;

- on laisse la composition organopolysiloxanique appliquée sous (3) durcir en élastomère.

ledit procédé étant caractérisé en ce que :

- dans la phase (1) la solution appliquée sur la surface de l'élàstomère, renferme au plus 15 % en poids du polymère méthylhydrogénopolysiloxanique ;

- dans la phase (2) le séchage de la couche déposée de la solution est obtenu par simple abandon à l'air ambiant pendant au plus une période de 3 heures.

2) Procédé selon la revendication 1, caractérisé en ce que le polymère méthylhydrogénopolysiloxanique répond à la formule générale moyenne ($F_1$) :

$$(CH_3)_xH_ySiO_{\frac{4-x-y}{2}}$$

dans laquelle le symbole x représente un nombre quelconque de valeur 0,9 à 1,99, le symbole y représente un nombre quelconque de valeur 0,1 à 1 et la somme x + y a une valeur de 1,2 à 2,6.

3) Procédé selon la revendication 1 ou 2, caractérisé en ce que l'élastomère silicone sur lequel est déposée la solution renfermant le polymère méthylhydrogénopolysiloxanique est choisi dans le groupe des élastomères issus de compositions organopolysiloxaniques durcissables à chaud.

4) Procédé selon l'une quelconque des revendications précédentes, caractérisé en ce que la composition organopolysiloxanique, durcissant en élastomère par une réaction d'addition, qui est appliouée sur la surface de l'élastomère silicone est choisie parmi les compositions dites à SiH et SiVi catalysées par un dérivé d'un métal du groupe du platine.

5) Matériaux composites utilisables comme embout isolant dans le domaine électrotechnique, caractérisé en ce qu'ils sont obtenus par la mise en oeuvre d'un procédé tel que défini selon l'une quelconque des revendications 1 à 4.

Office européen des brevets

**RAPPORT DE RECHERCHE EUROPEENNE**

**0 188 977**

EP 85 42 0229

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | FR-A-2 474 040 (TORAY SILICONE COMPANY)<br>* Revendications; page 6, lignes 25-32; exemple 1, experience no. 3 *<br>--- | 1-5 | C 08 J 5/12<br>C 08 L 83/04<br>H 01 B 3/46 |
| D,Y | GB-A-1 588 510 (DOW CORNING)<br>* Revendications; page 2, lignes 72-83; exemple *<br>----- | 1-5 | |
| | | | DOMAINES TECHNIQUES RECHERCHES (Int. Cl.4) |
| | | | C 08 J<br>H 01 B |

Le présent rapport de recherche a été établi pour toutes les revendications

| Lieu de la recherche | Date d'achèvement de la recherche | Examinateur |
|---|---|---|
| LA HAYE | 26-03-1986 | HALLEMEESCH A.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82